# EUROPEAN PATENT APPLICATION

(11) **EP 0 911 743 A1**
(43) Date of publication of application: **28.04.1999**
(21) Application number: 97650043.9
(22) Date of filing: 20.10.1997
(51) Int. Cl.: G06F 17/21, G06F 17/30

(54) **Converter for tag-delimited files**

(71) Applicant: King, Patrick Joseph, Dublin 1 (IE)
(72) Inventor: King, Patrick Joseph, Dublin 1 (IE)
(74) Representative: Schütte, Gearoid

(57) **Abstract**

The invention relates to a converter for automatically converting a tag delimited file (A). The file (A) is sequentially scanned to locate a given binary sequence stored in a code stop encounter buffer (B). A digital control string (E) is appended and control string (E) and binary sequence are written to first pass conversion file (F) the control string containing a colour indicator and a write protector to control further processing.

## Description

### Introduction

The invention relates to a converter and more particularly, the invention relates to the technical steps carried out in automatically converting a stored tag delimited file by:-
reading a tag delimited file received for conversion;
   identifying codes sections within the file;
   identifying code calls within the file;
   identifying and converting text portions of the file; and
   generating a converted file by combining the code sections, code calls and the converted text portions.

The cost of developing computer software is such that it is now imperative for individual developers and development organisations to exploit as many markets for the software as possible. In order to maximise this potential, it is imperative that the developed code be translated into as many languages as possible and thus a major cost factor in developing software has become that involved in localising or nationalising the software for markets whose language requirements are different to that in which the code was originally developed.

Nationalisation of this type does not generally prove to be a problem where operating code and data files are kept separate, as the data files containing the language components may be readily identified and translated leaving the operating code intact. Errors in translation are thus easily identified when the program or suite of programs are executed. However, current software development trends are toward the integration of code and data into individual files. Files of this type such as HTML, SGML, RTF or PostScript frequently in addition to the text component for nationalisation may contain code segments such as JAVA, audio elements or even back end web server code. This poses a problem in that personnel required to nationalise the software must be skilled, both in translation of the language components of these files and in the code in which it was developed. These skills are required in order to avoid inadvertently translating a section of code which could cause the nationalised software to generate errors under certain circumstances or to fail entirely. Additionally as personnel of this type are not always readily available the nationalisation is normally undertaken by a team thereby significantly increasing costs. A further difficulty arises in nationalising subsequent releases of software of this integrated type in that the entire process must be repeated even though there may be no or minimal text changes therefore incurring unnecessary costs.

When the development tool used to develop a given piece of software is known and available to the nationalisation team the task of converting the software is greatly facilitated. However, this is usually not the case therefore a great deal of expertise and user intervention is required. For example, it is known that while HTML uses a well defined set of code instructions not all HTML readers are inter-operable, thus, software nationalised in this manner while occasionally ninety per cent effective frequently introduces errors which take longer to eliminate than to manually convert all of the files. Additionally, as many developers do not have the resources to for nationalisation and out source this work, it is therefore very unlikely that the nationalisation team will have access to all possible development tools.

The invention is directed towards providing a file conversion means to automatically overcome the aforementioned problems without the need for excessive user intervention. An important point is that the invention relates to the technical steps of conducting the nationalisation and not to the nature of the data being processed. Where mention is made of a data type, this is done by way of illustration only.

There is therefore a need for a converter which will overcome these problems.

The invention is characterised in that the code sections of the file are identified by iteratively:-
reading in sequential eight bit data words from the received file to identify a pre-set binary sequence by referencing a code buffer,
initialising a tag a code store stack and writing sequentially successive data words to the stack until a second pre-set binary sequence is identified,
comparing the written contents of the code store stack with a database of known code types, and
appending a digital control string to the contents of the code store stack, the control string containing an RGB colour indicator associated with code stores and a write enable flag set to prevent amendment
the code calls of within the file are identified by iteratively:-
reading eight bit data words to detect a pre-set code call binary sequence by referencing a call stop encounter buffer,
initialising a code call stack,
writing predetermined number of data words immediately following the detected binary sequence to the code call stack, and
appending a digital control string to the contents of the code call stack, the control string containing an RGB colour indicator associated with code calls and a write enable flag set to prevent amendment
the step of identifying and converting text portions of the file are performed by retrieving each of the digital control strings E in sequence whose write enable bit is unset, passing the identified text portions to a temporary look up comparison register, comparing the temporary look up comparison register contents with a known translation database, retrieving the translated text from the database and amending the control string E to contain an RGB code associated with translated text and setting the write enable flag set to prevent amendment.

Preferably, identification of the code sections also uniquely identifies the contents of the code store stack which are not found in the database of known code types by appending a digital control string to the contents of the code store stack, the control string having a unique RGB colour indicator and a write enable flag set to allow amendment.

In one arrangement, identification of code calls is further achieved by:-
identifying a code calls associated with an additional file by bit comparing the written contents of the code store stack with an extended binary sequence;
reverse reading the file for conversion to identify a pre-set number of data words to identify a given binary sequence;
writing the reverse read data words to a file request buffer; and
assigning a digital control strings to the identified code calls and associated file references to prevent accidental amendment to the code call or associated file reference.

Ideally, the converter incorporates means for:-
identifying a code call associated with a compiled format file;
decompiling the compiled format file using a resource decompiler;
reading and searching the decompiled code to identify codes relating to read and interpret headers relating user interface portions of the file;
compiling the user interface portions of the file, loading and graphically editing the compiled user interface portions; and
recompiling, using the resource code compiler in conjunction with the non user interface portions of the compiled format file.

Preferably, the converter incorporates means for conducting a binary search and swap to isolate non functional code blocks.

### Detailed Description

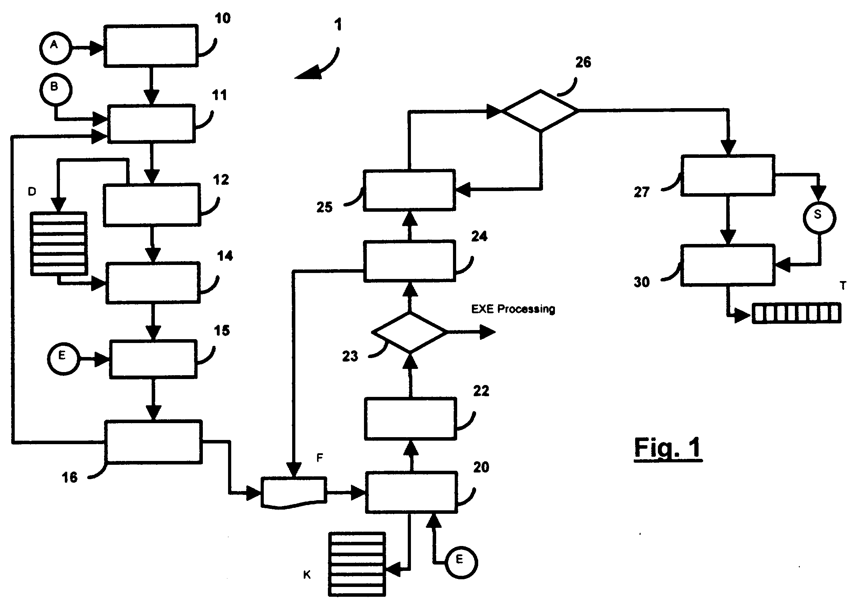

The invention will be more clearly understood from the following description of an embodiment thereof, given by way of example only with reference to the accompanying drawing in which :-
Fig. 1 is a flow-chart illustrating a file conversion of the invention for producing a converted tag delimited file.

Referring to the drawing there is illustrated a flow chart 1 of the invention for producing a converted tag delimited file. In step 10 a tag delimited file A for localisation or nationalisation is received, the file may be in any tagged or delimited format such as HTML, SGML, Postscript, EPS or RTF (Rich Text Format) however for illustrative purposes only HTML is referred to in this description and it will be appreciated that the technical conversion that the process conducts may equally be applied different formats. The file A is normally in an ANSI (American National Standards Institute) text file format and is sequentially read in raster format in data words of eight bits in step 11 until the ANSI code 60 or binary sequence 00111100 is encountered. This code is automatically detected by referencing a code stop encounter buffer B.

When the sequence is detected indicating the beginning of a tag a code store stack C is initialised in step 12 and subsequent data words are sequentially written into the code store stack C until the binary sequence 00111110 is encountered indicating the tag terminator. The contents of the code store stack C are then compared with a flat file database D retrieved from a fixed disk containing known and accepted tags in step 14. If the contents of the code store stack C matches one of the entries in the flat file database D a digital control string E is appended to the contents of the stack C in step 15 and the appended contents of the stack is written to a first pass conversion file F created in step 16. Control is returned to step 11 and the identification process for the tags contained in the file A is continued until and end of file code is recognised.

The control string E contains an RGB colour indicator and a write enable flag. All tags correctly identified from the database D in this manner are assigned and RGB code for grey in the appended control string E and write enable flag is written with logic 0 thus write protecting the identified tags. In this way known code tags contained within the file A are identified as known components thereby accelerating the nationalisation process. Furthermore as they are protected from being accidentally overwritten therefore code operation cannot be adversely affected.

When the contents of the code store stack C does not match one of the entries in the flat file database D the digital control string E which is appended to the contents of the stack C contains an RGB code for red and the write enable flag is written with logic 1 thus enabling changes to the unidentified tags. Thus the unrecognised code tags contained within the file A are automatically and immediately identified. Furthermore as they are not write protected they may be easily corrected. If the correction is obvious it may be done at localisation and notified to the developers without the need for a code re-work advantageously reducing lead times and increasing functionality of the nationalisation. Similarly if the unidentified code represents a new code it may be easily added to the database D to prevent further failure to recognise the code.

All data words read between the binary sequence 00111100 and the binary sequence 00111110 on the initial pass in step 11 have the control string E appended with the write protect flag not set and with the RGB component set green before being written to the first pass conversion file F. When the end of file code is detected the first pass conversion file F is re-read in data words of eight bits in step 20 until the ASCII code 46 or binary sequence 00101110 is automatically detected by referencing a call stop encounter buffer J. When the sequence is detected indicating the beginning of a code call a code call stack K is initialised in step 22 and the next three, eight bit data words are sequentially written into the code call stack K. A bit comparison is then conducted on the contents of the code store stack K to determine whether a match is found with the binary sequence 01001000 01010100 01001101. If the sequences match during the test step 23 the code call refers to a further file which will in turn require localisation. The first pass conversion file F is then reverse read in step 24 for two sixteen bit data words from an identified binary sequence 00101110 and these words written to a file request buffer R in step 25. The file request buffer acts as an automatic work scheduler for the nationalisation ensuring that called files are in turn nationalised and that no omissions are made resulting in sections of the software not being correctly localised. It will be appreciated that in addition to automating the conversion the invention obviates the need for user intervention in sequencing files for conversion and reduces the instruction for nationalisation required from the software developer. Subsequent file calls are similarly identified however before the identified file is appended to the file request buffer in step 25 a check is done in step 26 to ensure that the same file is not added to the buffer R a second time. All code calls and file name references identified in this way are re-written with the original contents of the first pass conversion file F to generate a second pass conversion file S in step 27. The digital control strings E of the identified code calls and file references are assigned a unique RGB code and the associated write protect flag assigned logic 0 to again prevent accidental amendment.

The second pass conversion file S is retrieved in step 30 and each of the digital control strings E whose RGB component is coded green is passed in turn to a temporary look up comparison register T. The contents of this register T is compared with entries in the known translation database. This is a straight bit comparison and does not seek to individually translate words. If a match is found for text associated with a given control string E, the control string E is amended and the RGB code altered to indicate a known text passage and the write enable flag set to 0. In the event that a the contents of the register T for a given control string E is not found in the known translation database, the control string E is amended to contain a unique RGB code and the write enable flag set to logic 1 to allow intervention by a translator or engineer. Once the passage has been translated and verified it is then added to the known translation database. It will thus be appreciated that minor amendments to a given piece of software are easily processed as only those amended portions requiring user intervention will be processed as all other sections will be converted automatically. Similarly the invention allows sufficient flexibility to ensure that sections of text are correctly converted.

When the code call identified in step 23 refers to a file which is in compiled format such as in an executable EXE format the invention allows for the decompilation of the EXE code using a resource decompiler. This decompiled code is then read to search for and identify code relating to the user interface. This search is achieved by decompiling the EXE binary/HEX code and sequentially reading and interpreting the decompiled code until all of the headers indicating both the start and end of the user interface resource code is identified. This interface code is then decompiled to provide introductory source code and may be loaded into a graphics development tool editor for manual editing. The code is then recompiled using the resource code compiler in conjunction with the remaining binary HEX code of the original file to regenerate the .EXE file. In the event that the code does not compile or runs incorrectly the code is decompiled as before and the original code is further decompiled. A binary search is then conducted to identify sectional blocks within the original decompile code and the translated decompile code and a binary swap is conducted to narrow the area of the error. Each swap being followed by a subsequent recompile/test sequence.

It will thus be appreciated that the technical steps of the invention allow for significantly reduced processing time and costs in nationalising of developed software. It will further be appreciated that these advantages are achieved independently of the development tools used to generate the software.

The invention is not limited to the embodiment hereinbefore described, but may be varied in construction and detail within the scope of the claims.

## Claims

1. A converter for automatically converting a stored tag delimited file by:-
reading a tag delimited file received for conversion;
identifying codes sections within the file;
identifying code calls within the file;
identifying and converting text portions of the file; and
generating a converted file by combining the code sections, code calls and the converted text portions
characterised in that,
the code sections of the file are identified by iteratively:-
reading in sequential eight bit data words from the received file to identify a pre-set binary sequence by referencing a code buffer,
initialising a tag a code store stack and writing sequentially successive data words to the stack until a second pre-set binary sequence is identified,
comparing the written contents of the code store stack with a database of known code types, and
appending a digital control string to the contents of the code store stack, the control string containing an RGB colour indicator associated with code stores and a write enable flag set to prevent amendment
the code calls of within the file are identified by iteratively:-
reading eight bit data words to detect a pre-set code call binary sequence by referencing a call stop encounter buffer,
initialising a code call stack,
writing predetermined number of data words immediately following the detected binary sequence to the code call stack, and
appending a digital control string to the contents of the code call stack, the control string containing an RGB colour indicator associated with code calls and a write enable flag set to prevent amendment
the step of identifying and converting text portions of the file are performed by retrieving each of the digital control strings E in sequence whose write enable bit is unset, passing the identified text portions to a temporary look up comparison register, comparing the temporary look up comparison register contents with a known translation database, retrieving the translated text from the database and amending the control string E to contain an RGB code associated with translated text and setting the write enable flag set to prevent amendment.

2. A converter as claimed in claim 1 wherein identification of the code sections also uniquely identifies the contents of the code store stack which are not found in the database of known code types by appending a digital control string to the contents of the code store stack, the control string having a unique RGB colour indicator and a write enable flag set to allow amendment.

3. A converter as claimed in claim 1 or claim 2 wherein identification of code calls is further achieved by:-
identifying a code calls associated with an additional file by bit comparing the written contents of the code store stack with an extended binary sequence;
reverse reading the file for conversion to identify a pre-set number of data words to identify a given binary sequence;
writing the reverse read data words to a file request buffer; and
assigning a digital control strings to the identified code calls and associated file references to prevent accidental amendment to the code call or associated file reference.

4. A converter as claimed in any preceding claim incorporating means for:-
identifying a code call associated with a compiled format file;
decompiling the compiled format file using a resource decompiler;
reading and searching the decompiled code to identify codes relating to read and interpret headers relating user interface portions of the file;
compiling the user interface portions of the file, loading and graphically editing the compiled user interface portions; and
recompiling, using the resource code compiler in conjunction with the non user interface portions of the compiled format file.

5. A converter as claimed in claim 4 incorporating means for conducting a binary search and swap to isolate non functional code blocks.
